(19) Europäisches Patentamt / European Patent Office / Office européen des brevets

(11) **EP 3 391 156 B1**

(12) **EUROPEAN PATENT SPECIFICATION**

(45) Date of publication and mention of the grant of the patent:
**15.02.2023  Bulletin 2023/07**

(21) Application number: **16826496.8**

(22) Date of filing: **07.12.2016**

(51) International Patent Classification (IPC):
**H02J 3/14** (1968.09)

(52) Cooperative Patent Classification (CPC):
**G05B 13/048; G05B 13/026; G05B 17/02;**
G05B 2219/23199; G05B 2219/2614;
G05B 2219/2638; G05B 2219/2648

(86) International application number:
**PCT/US2016/065301**

(87) International publication number:
**WO 2017/105952 (22.06.2017 Gazette 2017/25)**

(54) **ADAPTIVE CONTROL OF HVAC SYSTEM**

ADAPTIVE STEUERUNG EINES HLK-SYSTEMS

COMMANDE ADAPTATIVE DE SYSTÈME DE CVCA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015  US 201562269155 P**

(43) Date of publication of application:
**24.10.2018  Bulletin 2018/43**

(73) Proprietor: **Carrier Corporation**
**Farmington, Connecticut 06032 (US)**

(72) Inventors:
• **SIMON, Emile**
  **Penrose Wharf**
  **Cork (IE)**
• **CYCHOWSKI, Marcin**
  **Penrose Wharf**
  **Cork (IE)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
| | |
|---|---|
| WO-A1-2006/034718 | WO-A1-2015/077754 |
| WO-A2-2011/149600 | US-A1- 2011 046 792 |
| US-A1- 2014 277 769 | US-A1- 2015 045 962 |

• LEE K-H ET AL: "Development of methods for determining demand-limiting setpoint trajectories in buildings using short-term measurements", BUILDING AND ENVIRONMENT, PERGAMON PRESS, OXFORD, GB, vol. 43, no. 10, 1 October 2008 (2008-10-01), pages 1755-1768, XP022760808, ISSN: 0360-1323, DOI: 10.1016/J.BUILDENV.2007.11.004 [retrieved on 2007-11-19]

**Description**

TECHNICAL FIELD

The subject matter disclosed herein relates to heating, ventilation, and air conditioning (HVAC) systems and, more specifically, to the control of an HVAC system.

BACKGROUND

In some known heating, ventilation, and air conditioning (HVAC) systems, equipment setpoints are typically fixed or weather compensated (i.e., determined based on outdoor air temperature) without any feedback from other systems. As such, the produced heating/cooling capacity may deviate from a building demand corresponding to a desired building comfort level. Similarly, the authority of the capacity production and distribution system (e.g., the effort exerted by the HVAC system), which is determined via fluid flows/pressures and temperatures, may be unnecessarily high, so a lower authority could be sufficient to maintain the building comfort. The capacity deviations and the high authorities, due to their corresponding inefficient equipment operation or other energy losses, may result in increased energy consumption and cost.

WO 2015/077754 A1 shows a computer-implemented method of using an integrated methodology of forecasting and optimization to determine optimal values for a Combined Cooling, Heating, and Power (CCHP) system associated with a site including constructing a time-series regression model for cooling and electricity load demand based on long-term historical data associated with the CCHP system.

US 2015/0045962 A1 shows a system and a method for limiting power consumption by a heating, ventilation, and air conditioning (HVAC) subsystem of a building. A feedback controller is used to generate a manipulated variable based on an energy use setpoint and a measured energy use. The manipulated variable may be used for adjusting the operation of an HVAC device

WO 2006/034718 A1 shows a refrigeration system with a compressing unit, and a method of controlling a refrigeration system. To facilitate a better control, the capacity of the compressing unit is controlled based on a predicted future cooling demand rather than an actually determined cooling demand.

WO 2011/149600 A2 shows systems and methods for using a geographic location of networked consumer electronics devices as indications of occupancy of a structure for purposes of automatically adjusting the temperature setpoint on a thermostatic HVAC control.

US 2011/046792 A1 shows a system and method migrating virtualized environments. A home energy management system and method includes a database configured to store site report data received from a plurality of residential sites using a wireless home energy network at each site. Each residential site includes a thermostat accessible to the wireless home energy network. A processor is operably coupled to the database and configured to access the site report data and detect a current temperature set-point of the thermostat at a first residential site; detect a first seasonal profile of the thermostat; detect a current operating mode of a HVAC system operably coupled to the thermostat; and determine a thermostat schedule of the thermostat using the first seasonal profile and the current operating mode of the HVAC system.

US 2014/277769 A1 shows a system including an energy management system in operation with an intelligent, network-connected thermostat located at a structure. The thermostat acquires various information about the residence, such as a thermal retention characteristic of the residence, a capacity of an HVAC associated with the residence to cool or heat the residence, a likelihood of the residence being occupied, a forecasted weather, a real-time weather, and a real-time occupancy.

LEE K-H ET AL: "Development of methods for determining demand-limiting setpoint trajectories in buildings using short-term measurements", BUILDING AND ENVIRONMENT, PERGAMON PRESS, OXFORD, GB, vol. 43, no 10, 1 October 2008, pages 1755-1768, XP022760808 shows approaches for estimating building zone temperature setpoint variations that minimize peak cooling demand during critical demand periods. A weighted-averaging method is a data-based method in which an optimal weighing facrtor is found that minimizes a weighted-average of two loads and then used for weighted averaging of two initial bound setpoint trajectories.

BRIEF DESCRIPTION

One embodiment of the invention is an HVAC system according to claim 1.

Further embodiments may include wherein the controller is configured to update the adaptive setpoint at predetermined time intervals.

Further embodiments may include wherein determining the demand forecast comprises applying a model-free technique to one or more past values of the aggregate demand and a current aggregate demand.

Further embodiments may include wherein determining the demand forecast comprises applying a model-based technique to estimate a model of the HVAC system and use the model to estimate the demand forecast in response to the aggregate demand.

Further embodiments may include wherein determining the setpoint offset comprises (i) if the demand forecast indicates an increasing demand of the conditioned space, then selecting a setpoint offset to increase authority of the HVAC system and (ii) if the demand forecast indicates a decreasing demand of the conditioned space, then selecting a setpoint offset to decrease authority of the HVAC system.

Further embodiments may include wherein determining the setpoint offset comprises selecting the setpoint offset in response to whether the demand forecast is within a desired region or within a distance to a desired value.

Further embodiments may include wherein determining the setpoint offset comprises adjusting the setpoint offset by a fixed value.

Further embodiments may include wherein determining the setpoint offset comprises using a formula determining a value for adjusting the setpoint offset.

Further embodiments may include wherein determining the setpoint offset comprises using a control process to stabilize the demand forecast.

Further embodiments may include wherein determining the setpoint offset comprises determining that the adaptive setpoint exceeds a range and re-determining the setpoint offset such as the resulting adaptive setpoint does not exceed the range.

Further embodiments may include wherein the controller is configured to filter the adaptive setpoint prior to providing the adaptive setpoint to the at least one of the plurality of HVAC components.

Another embodiment of the invention is a method according to claim 8.

Further embodiments may include updating the adaptive setpoint at predetermined time intervals.

Further embodiments may include wherein determining the demand forecast comprises applying a model-free technique to one or more past values of the aggregate demand and a current aggregate demand.

Further embodiments may include wherein determining the demand forecast comprises applying a model-based technique to estimate a model of the HVAC system and use the model to estimate the demand forecast in response to the aggregate demand.

Further embodiments may include wherein determining the setpoint offset comprises (i) if the demand forecast indicates an increasing demand of the conditioned space, then selecting a setpoint offset to increase authority of the HVAC system and (ii) if the demand forecast indicates a decreasing demand of the conditioned space, then selecting a setpoint offset to decrease authority of the HVAC system.

Further embodiments may include wherein determining the setpoint offset comprises selecting the setpoint offset in response to whether the demand forecast is within a desired region or within a distance to a desired value.

Further embodiments may include wherein determining the setpoint offset comprises adjusting the setpoint offset by a fixed value.

Further embodiments may include wherein determining the setpoint offset comprises using a formula determining a value for adjusting the setpoint offset.

Further embodiments may include wherein determining the setpoint offset comprises using a control process to stabilize the demand forecast.

Further embodiments may include wherein determining the setpoint offset comprises determining that the adaptive setpoint exceeds a range and re-determining the setpoint offset such as the resulting adaptive setpoint does not exceed the range.

Further embodiments may include filtering the adaptive setpoint prior to providing the adaptive setpoint to the at least one of the plurality of HVAC components.

Another embodiment of the invention is a computer program product according to claim 15.

Technical effects of embodiments of the present disclosure include adaptive control of an HVAC system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The foregoing and other features, and advantages of embodiments are apparent from the following detailed description taken in conjunction with the accompanying drawings in which:

FIG. 1 depicts an HVAC system in an exemplary embodiment;
FIG. 2 depicts a control diagram in an exemplary embodiment;

FIG. 3 depicts determining aggregated demand in an exemplary embodiment; and

FIG. 4 is a flow chart illustrating a method of controlling the system shown in FIG. 1 in an exemplary embodiment.

DETAILED DESCRIPTION

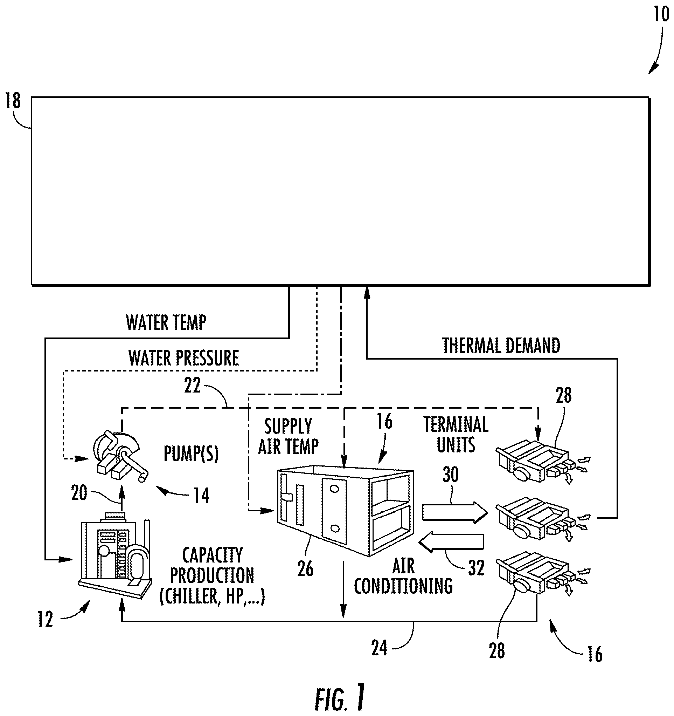

FIG. 1 illustrates an exemplary HVAC system 10 that generally includes a capacity generation plant 12, a fluid circulation pump 14, ventilation equipment 16, and a controller 18. The HVAC system 10 of FIG. 1 is just one example of an HVAC system, and it is understood that embodiments are not limited to the particular components and configuration depicted in FIG. 1. A capacity generation plant 12 conditions (i.e., heats/cools) a heat transfer fluid such as water and supplies the conditioned fluid to pump 14 via a conduit 20. Pump 14 subsequently supplies the conditioned fluid to ventilation equipment 16 (via a supply conduit 22) where the conditioned fluid is utilized to condition air forced through ventilation equipment 16. The conditioned air is then used to adjust the temperature of a building or structure associated with HVAC system 10. The fluid is then returned to capacity generation plant 12 via a return conduit 24 where the fluid is re-conditioned. Controller 18 is configured to coordinate the operation of capacity generation plant 12, pump 14, and ventilation equipment 16 with a demand of the building to reduce energy consumption through improved system efficiency. Although the HVAC system 10 is referred to as conditioning a building, embodiments may be more generally referred to as conditioning a space, such as a room, an automobile, an aircraft, etc.

Capacity generation plant 12 may be, for example a heat pump, a chiller, or a boiler. However, capacity generation plant 12 may be any type of capacity generation plant that enables HVAC system 10 to function as described herein. Capacity generation plant 12 is configured to heat or cool a heat transfer fluid (e.g., water) to facilitate environmental conditioning of the buildings. As such, capacity generation plant 12 may be controlled to selectively adjust the temperature of the heat transfer fluid.

Fluid circulation pump 14 is configured to supply the heat transfer fluid from capacity generation plant 12 to ventilation equipment 16. Pump 14 may be controlled to selectively adjust the pressure (or flow) of the heat transfer fluid. Ventilation equipment 16 may be any suitable equipment to supply conditioned air to selected zones or areas of the building. For example, in the illustrated embodiment, ventilation equipment 16 includes an air handling unit (AHU) 26 and a plurality of terminal units 28 connected via air ducts (not shown) to that AHU 26. AHU 26 is configured to receive outside air and supply the outside air (via a supply conduit 30) to one or more terminal units 28, which condition the air and supply it to the zones associated with the respective terminal unit(s) 28. The conditioned air is subsequently returned to AHU 26 via a return conduit 32 where it may be recycled or exhausted to the atmosphere. In the illustrated embodiment, terminal units 28 are fan coil units. However, terminal units 28 may be any suitable equipment that enables HVAC system 10 to function as described herein. For example, terminal units 28 may be fan coil units (FCUs), air terminal units (ATUs), variable air volume systems (VAV), or even AHUs.

Controller 18 may be a system-level controller configured to adaptively adjust operational setpoints of capacity generation plant 12, pump 14, and ventilation equipment 16 based on load conditions and a thermal demand of the building. For example, a setpoint of plant 12 may be a fluid supply temperature, a setpoint of pump 14 may be a fluid pressure or flow, and a setpoint of equipment 16 may be a valve or damper opening, a fan speed, a supply air flow and/or temperature setpoint for that equipment for a room or zone. As used herein, the term controller refers to an application specific integrated circuit (ASIC), an electronic circuit, a processor (shared, dedicated, or group) and memory that executes one or more software or firmware programs, a combinational logic circuit, and/or other suitable components that provide the described functionality.

In the exemplary embodiment, controller 18 facilitates adjusting the setpoints of capacity generation plant 12, pump 14, and ventilation equipment 16. It is understood that, depending on the application and environment, controller 18 may adaptively adjust a wide variety of setpoints of an HVAC system, and embodiments are not limited to the particular setpoints discussed herein.

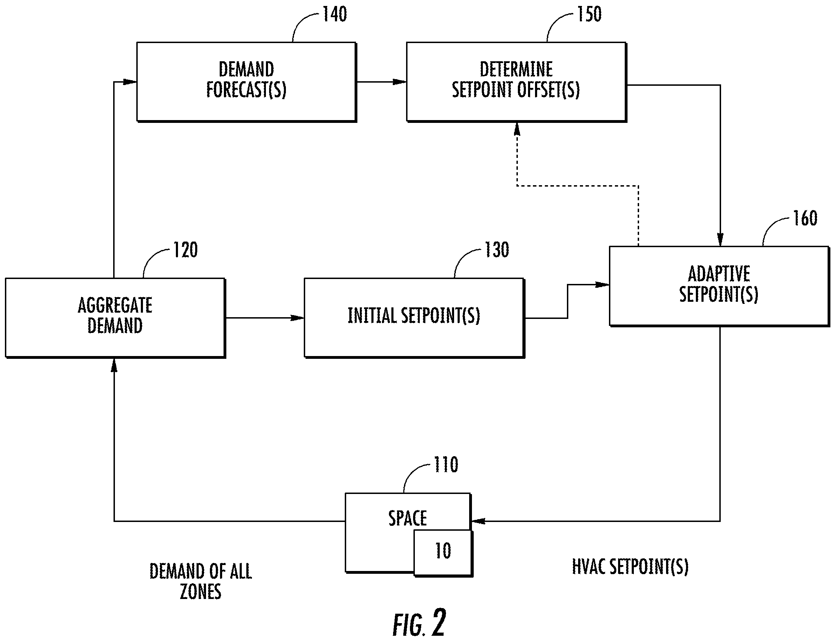

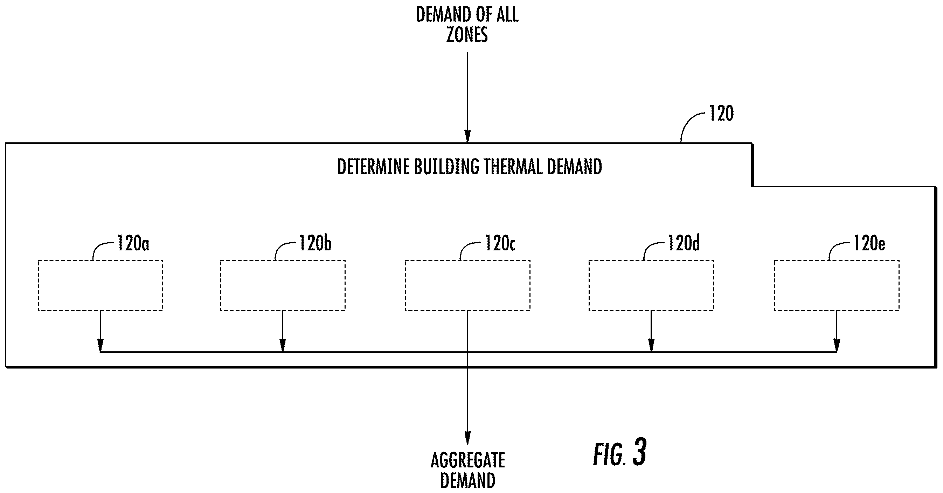

FIG. 2 depicts a control diagram executed by the controller 18 in an exemplary embodiment. The space to be conditioned (e.g. a building) is depicted at 110, and includes components of the HVAC system 10. At 120, the controller 18 determines the aggregate demand for HVAC conditioning of space 110. Determining the aggregate demand is described in further detail herein with reference to FIG. 3. At 130, the controller 130 determines initial setpoint(s) based on the aggregate demand from 120. The processing at 130 may include using static resources such as fixed rules, fixed maps, look up tables, etc., along with environmental measurements, such as outside air temperature. At 140, the controller 18 determines a demand forecast for space 110, described in further detail herein. At 150, the controller 18 determines one or more setpoint offsets. The determination of the one or more setpoint offsets is described in further detail herein. At 160, the controller 18 generates adaptive setpoint(s) by combining the initial setpoint(s) from 130 with the setpoint offset(s) from 150. At 160, the controller 18 may also determine if the adaptive setpoint(s) exceed one or more ranges. If so, flow proceeds back to 150 to adjust the setpoint offset(s), which are then used again to determine the adaptive setpoint(s) at 160. Once the adaptive setpoint(s) determined at 160 do not exceed the one or more ranges, the adaptive setpoint(s) are provided to at least one HVAC component in space 110. The controller 18 may execute the control routine periodically (e.g., every 5 minutes).

FIG. 3 depicts determining the aggregate demand, performed at 120 of FIG. 2, in an exemplary embodiment. At 120, the controller 18 determines the current aggregate demand, which is the total thermal heating or cooling demand required by the building/system served by the HVAC component under consideration (e.g., 12, 14, 16). The current building demand may be determined in various ways as represented by 120a-120e.

For example, at 120a, controller 18 determines the current building demand by:

$$\text{Equation (1)} \quad \Delta T_{Cool} = \frac{\sum^{NFCooling} \Delta T_i}{NtotFCUs} \text{ or } \Delta T_{Heat} = \frac{\sum^{NFHeating} \Delta T_i}{NtotFCUs},$$

where *NFCooling* or *NFHeating* are the set of terminal units 28 in cooling or heating demand, respectively, $\Delta T_i = RAT_{SP,i} - RAT_i$ is the difference between the room/zone air temperature setpoint $RAT_{SP,i}$ and the measured room air temperature $RAT_i$ (with i referring to the terminal unit number), and *NtotFCUs* being the total number of terminal units 28 being connected to and served by the HVAC component (i.e., the fixed number of terminal units 28, which is always larger or equal to the number of units 28 currently in heating or cooling demand).

At 120b, controller 18 determines the current building demand by:

$$\text{Equation (2)} \quad \Delta T_{Cool} = \frac{\sum^{NFCooling} V_i \Delta T_i}{Vtot} \text{ or } \Delta T_{Heat} = \frac{\sum^{NFHeating} Vi\Delta T_i}{Vtot},$$

where the current building demand is calculated the same as in Equation (1), except where the $\Delta T_i$ are weighted according to a sizing factor $Vi$ for each terminal unit 28 (zone). These weighting factors $Vi$ can be, for example, the unit rated capacity, the area or the volume of the zone served by the terminal unit 28, or a priority measure chosen by the building owner. The *Vtot* measure is the sum of all the weighting factors over all the relevant terminal units 28 installed in the building/system 10 (i.e. connected to the HVAC component being coordinated with these terminal units 28). For the particular cases where $Vi$ is equal to 1, or the area of the zone or the volume of the zone served by that terminal unit 28, then *Vtot* is equal to the total number of terminal units 28 installed, or the total building surface or volume served (through the terminal units) by the coordinated HVAC component, respectively.

At 120c, controller 18 determines the current building demand utilizing Equation (2), but where $\Delta T_i$ is replaced by another relevant measure of the demand of terminal unit 28 (in the relevant heating/cooling mode). All signals measured at the terminal unit 28 could potentially be leveraged to determine its demand. In particular, such value of demand may be: fan(s) speed(s), valve(s) or damper(s) openings, electrical heater(s) usage of the terminal unit, temperature(s) of the air going in or out of the unit, a measure of the capacity(ies) or power used by the terminal unit, a measure of temperatures and flows of fluids through the unit, or a combination thereof.

At 120d, the controller 18 determines the current building demand by utilizing HVAC component (e.g., plant 12, pump 14, equipment 16) measurements in addition to or instead of terminal unit measurements in steps 120a-120c. Such measurements of the HVAC component may be: the fan(s) speed(s), the valve(s) or damper(s) openings, the electrical heater(s) usage of the terminal unit, the temperature(s) of the air going in or out of the unit, the measure of the capacity(ies) or power used by the terminal unit, the measure of temperatures and flows of fluids through the unit, or a combination thereof.

At 120e, the controller 18 determines the current building demand by a combination of one or more of steps 120a-120d. The aggregate demand derived at 120 is then used at both 130 and 140, as shown in FIG. 2.

Referring to FIG. 2, the controller 18 uses the aggregate demand derived at 120 to determine initial setpoint(s) at 130. The processing at 130 may include using static resources such as fixed rules, fixed maps, look up tables, etc., that convert the aggregate demand from 120 to one or more initial setpoints.

At 140, the controller 18 also uses the aggregate demand derived at 120 to determine a demand forecast for space 110. In one embodiment, the controller 18 determines the demand forecast using a model-free technique, such as a linear interpolation or regression of one or several past values of the aggregate demand and a current value of the aggregate demand. In another embodiment, the controller 18 determines the demand forecast using a model-based determination. The model-based determination includes first estimating a dynamic model of the system via system estimation techniques and data of past system operation. Once this model has been estimated, this model and the current and past model inputs values can be used to estimate the demand forecast in response to the aggregate demand derived at 120.

At 150, the controller 18 determines one or more setpoint offsets. When the controller 18 first begins operating, the setpoint offset(s) are initialized to zero. The setpoint offset(s) are then continually updated from a previous value of the setpoint offset(s). In one embodiment, if the demand forecast from 140 indicates an increased demand (e.g., increased authority) of the conditioned space 110 (e.g., a need for more cooling), then the setpoint offset(s) are selected to increase authority of the HVAC system (e.g., lower a chiller temperature and/or higher pump pressure). If the demand forecast from 140 indicates a decreased demand (e.g., decreased authority) of the conditioned space 110 (e.g., desired cooling met or exceeded), then the setpoint offset(s) are selected to decrease authority of the HVAC system (e.g., raise chiller temperature and/or lower pump pressure). In another embodiment, the setpoint offset(s) may be selected based on a region in which the current or forecasted demand(s) should lie or a distance between the demand forecast(s) and desired value(s). The controller 18 can then increase or decrease the setpoint offset(s) keep the HVAC demand inside the desired region or within a distance between the demand forecast(s) and desired value(s). Both techniques may be used in conjunction as well.

The controller 18, once determining whether to increase or decrease the setpoint offset(s), also determines an amount by which to increase or decrease the setpoint offset(s). In one embodiment, the setpoint offset(s) are adjusted based on fixed values (such as 1°C or 10kPa). In another embodiment, the controller 18 determines a value for the setpoint offset(s) using a formula involving the current, past and forecasted values of the building demand. In yet another embodiment, the controller 18 determines a value for the setpoint offset(s) using an existing control process (e.g., PID control), such that the current demand stabilizes around a given setpoint.

The controller 18 may also adjust the setpoint offset(s) based on feedback from 160. If an adaptive setpoint (i.e., the combination of an initial setpoint and a setpoint offset) exceeds a range, then the controller 18 will re-determine the setpoint offset at 150. This is shown in FIG. 2 as a dashed feedback line from 160 to 150. The controller 18 retro-actively adjusts the current setpoint offset(s) such that the adaptive setpoint(s) at 160 falls in the desired given range(s). The range(s) typically depend on equipment specifications or are user-defined. The range(s) can furthermore be varied (made larger or narrower) depending on adequately chosen reference signal(s) (such as the outside temperature or the aggregate demand).

At 160, the controller 18 combines the initial setpoint(s) 130 with the setpoint offset(s) from 150 to obtain the adaptive setpoint(s). As noted above, at 160 the controller 18 may also compare the adaptive setpoint(s) to one or more ranges, and generate an error signal if the adaptive setpoint(s) exceed one or more ranges. The setpoint offset(s) are then re-determined at 150, which then results in 160 in the adaptive setpoint(s) falling within the desired range(s). In another embodiment, the adaptive setpoint(s) can be processed through a dynamic filter before being sent to the HVAC equipment (such as a low-pass filter that rejects undesired fast setpoint(s) variations).

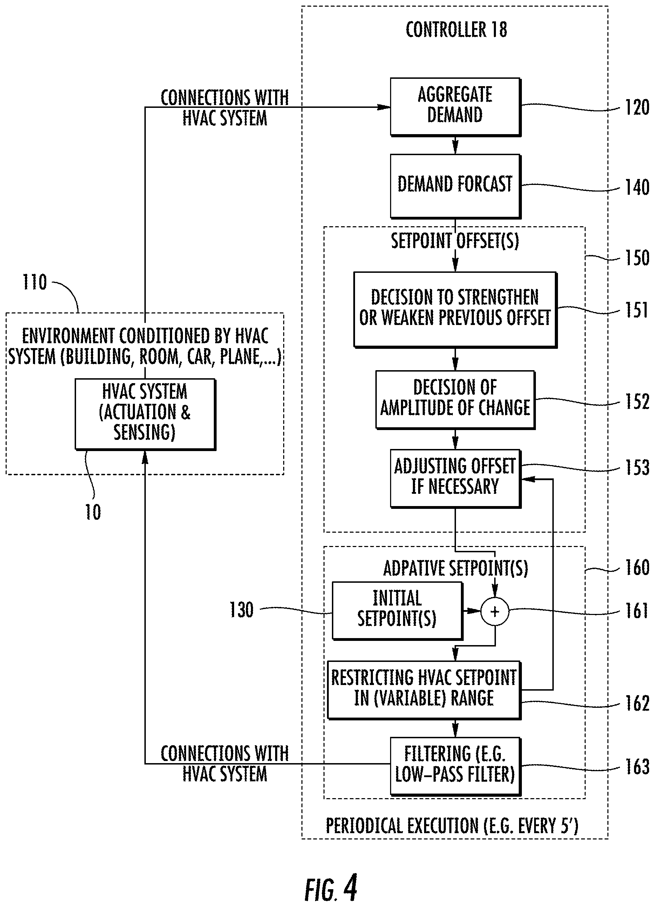

FIG. 4 depicts processing of the controller 18 in a flowchart format, in an exemplary embodiment. Elements of FIG. 4 are similar to those in FIG. 2, and similar reference numerals are employed. The space to be conditioned is depicted at 110. At 120, the controller 18 determines the aggregate demand for HVAC conditioning of space 110. At 130, the controller 130 determines an initial setpoint(s) based on the aggregate demand from 120. The processing at 130 may include using static resources such as fixed rules, fixed maps, look up tables, etc. At 140, the controller 18 determines a demand forecast for space 110. At 150, the controller 18 determines one or more setpoint offsets. The processing at 150 may include determining whether to increase or decrease the setpoint offset at 151, determining the amount or amplitude of change in the setpoint offset(s) at 152 and/or adjusting the setpoint offset(s) at 153.

At 160, the controller 18 generates adaptive setpoint(s) by combining the initial setpoint(s) from 130 with the setpoint offset(s) from 150. At 160, the controller 18 may also determine if the adaptive setpoint(s) exceed one or more ranges. The processing at 160 may include combining the initial setpoint(s) 130 with the setpoint offset(s) at 161, limiting the setpoint offset(s) if the adaptive setpoint(s) exceed one or more ranges at 162 and filtering the adaptive setpoint(s) at 163.

Embodiments describe herein provide a control system and method that allows HVAC setpoints to be adjusted adaptively to both meet comfort demands and reduce energy consumption. Embodiments balance energy consumption and comfort, in a manner driving the system (including both the space conditioned 110 and HVAC system 10) behavior to go periodically through states where the comfort could not be improved without increasing power usage, or the power usage could not be decreased without decreasing comfort.

For any given HVAC system, the current embodiments can be used one or multiple times, to control one or several equipment of the system, separately or simultaneously. Each of these different applications can of course leverage different embodiments of the current disclosure, and these different applications can have common steps or otherwise leverage each other.

As described above, the exemplary embodiments can be in the form of processor-implemented processes and devices for practicing those processes, such as a processor of controller 18. The exemplary embodiments can also be in the form of computer program code containing instructions embodied in tangible media, such as floppy diskettes, CD ROMs, hard drives, or any other computer-readable storage medium, wherein, when the computer program code is loaded into and executed by a computer, the computer becomes a device for practicing the exemplary embodiments. The exemplary embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the exemplary embodiments. When implemented on a general-purpose microprocessor, the computer program code segments configure the microprocessor to create specific logic circuits.

**Claims**

1. A HVAC system (10) having a plurality of HVAC components, one or more terminal units (28) and a control system, the control system comprising:
   a controller (18) having a processor and a memory, the controller (18) in signal communication with at least one of the plurality of HVAC components, the controller (18) configured to:

   determine an aggregate demand of the HVAC system (10), wherein the aggregate demand is a total thermal heating or cooling demand required by a building or a system served by the HVAC system (10);
   determine an initial setpoint in response to the aggregate demand;
   determine a demand forecast in response to the aggregate demand;
   determine a setpoint offset in response to the demand forecast;
   generate an adaptive setpoint by combining the initial setpoint and the setpoint offset; and
   provide the adaptive setpoint to the at least one of the plurality of HVAC components;
   **characterized in that** the aggregate demand is determined by

$$\Delta T_{Cool} = \frac{\sum_{}^{NFCooling} V_i \Delta T_i}{Vtot} \quad \text{or} \quad \Delta T_{Heat} = \frac{\sum_{}^{NFHeating} Vi\Delta T_i}{Vtot},$$

   where $\Delta T_i = RAT_{SP,i} - RAT_i$ is the difference between the room/zone air temperature setpoint $RAT_{SP,i}$ and the measured room air temperature $RAT_i$ (with i referring to the terminal unit number), where the $\Delta T_i$ are weighted according to a sizing factor $Vi$ for each terminal unit (28), wherein the weighting factors $Vi$ are one or more of a unit rated capacity, an area or a volume of a zone served by the terminal unit (28), or a priority measure chosen by the building owner; and wherein the $Vtot$ measure is the sum of all the weighting factors over all the terminal units (28) installed in the HVAC system (10).

2. The HVAC system of claim 1, wherein the controller (18) is configured to update the adaptive setpoint at predetermined time intervals.

3. The HVAC system of claim 1 or 2, wherein determining the demand forecast comprises applying a model-free technique to one or more past values of the aggregate demand and a current aggregate demand.

4. The HVAC system of any of claims 1 to 3, wherein determining the demand forecast comprises applying a model-based technique to estimate a model of the HVAC system (10) and use the model to estimate the demand forecast in response to the aggregate demand.

5. The HVAC system of any of claims 1 to 4, wherein determining the setpoint offset comprises (i) if the demand forecast indicates an increasing demand of the conditioned space (110), then selecting a setpoint offset to increase authority of the HVAC system (10) and (ii) if the demand forecast indicates a decreasing demand of the conditioned space (110), then selecting a setpoint offset to decrease authority of the HVAC system (10); or

   wherein determining the setpoint offset comprises selecting the setpoint offset in response to whether the demand forecast is within a desired region or within a distance to a desired value; or
   wherein determining the setpoint offset comprises adjusting the setpoint offset by a fixed value; or
   wherein determining the setpoint offset comprises using a formula determining a value for adjusting the setpoint offset; or
   wherein determining the setpoint offset comprises using a control process to stabilize the demand forecast.

6. The HVAC system of any of claims 1 to 5, wherein determining the setpoint offset comprises determining that the adaptive setpoint exceeds a range and re-determining the setpoint offset such as the resulting adaptive setpoint does not exceed the range.

7. The HVAC system of any of claims 1 to 8, wherein the controller (18) is configured to filter the adaptive setpoint prior to providing the adaptive setpoint to the at least one of the plurality of HVAC components.

8. A method of controlling an HVAC system (10) having a plurality of HVAC components, one or more terminal units (28) and a control system in signal communication with the plurality of HVAC components, the method comprising:

determining an aggregate demand of the HVAC system (10), wherein the aggregate demand is a total thermal heating or cooling demand required by a building or a system served by the HVAC system (10);
determining an initial setpoint in response to the aggregate demand;
determining a demand forecast in response to the aggregate demand;
determining a setpoint offset in response to the demand forecast;
generating an adaptive setpoint by combining the initial setpoint and the set-point offset; and
providing the adaptive setpoint to at least one of the plurality of HVAC components;
**characterized in that** the aggregate demand is determined by

$$\Delta T_{Cool} = \frac{\sum^{NFCooling} V_i \Delta T_i}{Vtot} \quad \text{or} \quad \Delta T_{Heat} = \frac{\sum^{NFHeating} Vi\Delta T_i}{Vtot},$$

where $\Delta T_i = RAT_{SP,i} - RAT_i$ is the difference between the room/zone air temperature setpoint $RAT_{SP,i}$ and the measured room air temperature $RAT_i$ (with i referring to the terminal unit number), where the $\Delta T_i$ are weighted according to a sizing factor $Vi$ for each terminal unit (28), wherein the weighting factors $Vi$ are one or more of a unit rated capacity, an area or a volume of a zone served by the terminal unit (28), or a priority measure chosen by the building owner; and wherein the $Vtot$ measure is the sum of all the weighting factors over all the terminal units (28) installed in the HVAC system (10).

9. The method of claim 8, further comprising updating the adaptive setpoint at predetermined time intervals.

10. The method of claim 8 or 9, wherein determining the demand forecast comprises applying a model-free technique to one or more past values of the aggregate demand and a current aggregate demand.

11. The method of any of claims 8 to 10, wherein determining the demand forecast comprises applying a model-based technique to estimate a model of the HVAC system (10) and use the model to estimate the demand forecast in response to the aggregate demand.

12. The method of any of claims 8 to 11, wherein determining the setpoint offset comprises (i) if the demand forecast indicates an increasing demand of the conditioned space (110), then selecting a setpoint offset to increase authority of the HVAC system (10) and (ii) if the demand forecast indicates a decreasing demand of the conditioned space (110), then selecting a setpoint offset to decrease authority of the HVAC system (10); or

wherein determining the setpoint offset comprises selecting the setpoint offset in response to whether the demand forecast is within a desired region or within a distance to a desired value; or
wherein determining the setpoint offset comprises adjusting the setpoint offset by a fixed value; or
wherein determining the setpoint offset comprises using a formula determining a value for adjusting the setpoint offset; or
wherein determining the setpoint offset comprises using a control process to stabilize the demand forecast.

13. The method of any of claims 8 to 12, wherein determining the setpoint offset comprises determining that the adaptive setpoint exceeds a range and re-determining the setpoint offset such as the resulting adaptive setpoint does not exceed the range.

14. The method of any of claims 8 to 13, further comprising filtering the adaptive setpoint prior to providing the adaptive setpoint to the at least one of the plurality of HVAC components.

15. A computer program product tangibly embodied on a computer readable medium, the computer program product including instructions that, when executed by a processor, cause the processor to perform operations comprising:

determining an aggregate demand of a HVAC system (10), wherein the aggregate demand is a total thermal heating or cooling demand required by a building or a system served by the HVAC system (10);
determining an initial setpoint in response to the aggregate demand;
determining a demand forecast in response to the aggregate demand;
determining a setpoint offset in response to the demand forecast;
generating an adaptive setpoint by combining the initial setpoint and the set-point offset; and
providing the adaptive setpoint to at least one of the plurality of HVAC components;
**characterized in that** the aggregate demand is determined by

$$\Delta T_{Cool} = \frac{\sum^{NFCooling} V_i \, \Delta T_i}{Vtot} \quad \text{or} \quad \Delta T_{Heat} = \frac{\sum^{NFHeating} Vi \Delta T_i}{Vtot},$$

where $\Delta T_i = RAT_{SP,i} - RAT_i$ is the difference between the room/zone air temperature setpoint $RAT_{SP,i}$ and the measured room air temperature $RAT_i$ (with i referring to the terminal unit number), where the $\Delta T_i$ are weighted according to a weighting factor $Vi$ for each terminal unit (28), wherein the weighting factors $Vi$ are one or more of a unit rated capacity, an area or a volume of a zone served by the terminal unit (28), or a priority measure chosen by the building owner; and wherein the $Vtot$ measure is the sum of all the weighting factors over all the terminal units (28) installed in the HVAC system (10).

**Patentansprüche**

1.  HLK-System (10), das eine Vielzahl von HLK-Komponenten, eine oder mehrere Endgeräteeinheiten (28) und ein Steuersystem aufweist, wobei das Steuersystem Folgendes umfasst:
    eine Steuerung (18), die einen Prozessor und einen Speicher aufweist, wobei die Steuerung (18) in Signalkommunikation mit mindestens einer aus der Vielzahl von HLK-Komponenten ist, wobei die Steuerung (18) für Folgendes konfiguriert ist:

    Bestimmen eines Gesamtbedarfs des HLK-Systems (10), wobei der Gesamtbedarf ein gesamter thermischer Heiz- oder Kühlbedarf ist, der durch ein Gebäude oder ein System benötigt wird, das durch das HLK-System (10) versorgt wird;
    Bestimmen eines Anfangssollwerts als Reaktion auf den Gesamtbedarf;
    Bestimmen einer Bedarfsprognose als Reaktion auf den Gesamtbedarf;
    Bestimmen eines Sollwertversatzes als Reaktion auf die Bedarfsprognose;
    Erzeugen eines adaptiven Sollwerts durch Kombinieren des Anfangssollwerts und des Sollwertversatzes; und
    Bereitstellen des adaptiven Sollwerts an die mindestens eine aus der Vielzahl von HLK-Komponenten;
    **dadurch gekennzeichnet, dass** der Gesamtbedarf bestimmt wird durch

    $$\Delta T_{Cool} = \frac{\sum^{NFCooling} V_i \, \Delta T_i}{Vtot} \text{ oder } \Delta T_{Heat} = \frac{\sum^{NFHeating} Vi \Delta T_i}{Vtot},$$

    wobei $\Delta T_i = RAT_{SP,i} - RAT_i$ die Differenz zwischen dem Raum-/Zonenlufttemperatursollwert $RAT_{SP,i}$ und der gemessenen Raumlufttemperatur $RAT_i$ ist (wobei sich i auf die Endgeräteeinheitsnummer bezieht), wobei die $\Delta T_i$ gemäß einem Dimensionierungsfaktor $Vi$ für jede Endgeräteeinheit (28) gewichtet werden, wobei die Gewichtungsfaktoren $Vi$ eines oder mehrere von einer Einheitsnennkapazität, einem Bereich oder einem Volumen einer Zone, die durch die Endgeräteeinheit (28) versorgt wird, oder einer Prioritätsmaßnahme sind, die durch den Gebäudeeigentümer gewählt wird; und wobei das Maß $Vtot$ die Summe aller Gewichtungsfaktoren über alle Endgeräteeinheiten (28) ist, die in dem HLK-System (10) installiert sind.

2.  HLK-System nach Anspruch 1, wobei die Steuerung (18) konfiguriert ist, um den adaptiven Sollwert in vorbestimmten Zeitintervallen zu aktualisieren.

3.  HLK-System nach Anspruch 1 oder 2, wobei das Bestimmen der Bedarfsprognose ein Anwenden einer modellfreien Technik auf einen oder mehrere vergangene Werte des Gesamtbedarfs und einen aktuellen Gesamtbedarf umfasst.

4.  HLK-System nach einem der Ansprüche 1 bis 3, wobei das Bestimmen der Bedarfsprognose ein Anwenden einer modellbasierten Technik zum Schätzen eines Modells des HLK-Systems (10) und Verwendung des Modells zum Schätzen der Bedarfsprognose als Reaktion auf den Gesamtbedarf umfasst.

5. HLK-System nach einem der Ansprüche 1 bis 4, wobei das Bestimmen des Sollwertversatzes Folgendes umfasst: (i) wenn die Bedarfsprognose einen zunehmenden Bedarf des klimatisierten Raums (110) angibt, dann Auswählen eines Sollwertversatzes zum Erhöhen von Autorität des HLK-Systems (10), und (ii) wenn die Bedarfsprognose einen abnehmenden Bedarf des klimatisierten Raums (110) angibt, dann Auswählen eines Sollwertversatzes zum Verringern von Autorität des HLK-Systems (10); oder

wobei das Bestimmen des Sollwertversatzes ein Auswählen des Sollwertversatzes als Reaktion darauf umfasst, ob die Bedarfsprognose innerhalb einer gewünschten Region oder innerhalb einer Entfernung zu einem gewünschten Wert ist; oder
wobei das Bestimmen des Sollwertversatzes ein Einstellen des Sollwertversatzes um einen festen Wert umfasst; oder
wobei das Bestimmen des Sollwertversatzes ein Verwenden einer Formel umfasst, die einen Wert zum Einstellen des Sollwertversatzes bestimmt; oder
wobei das Bestimmen des Sollwertversatzes ein Verwenden eines Steuerprozesses zum Stabilisieren der Bedarfsprognose umfasst.

6. HLK-System nach einem der Ansprüche 1 bis 5, wobei das Bestimmen des Sollwertversatzes ein Bestimmen, dass der adaptive Sollwert eine Spanne überschreitet, und erneutes Bestimmen des Sollwertversatzes umfasst, sodass der resultierende adaptive Sollwert die Spanne nicht überschreitet.

7. HLK-System nach einem der Ansprüche 1 bis 6, wobei die Steuerung (18) konfiguriert ist, um den adaptiven Sollwert zu filtern, bevor der adaptive Sollwert an die mindestens eine aus der Vielzahl von HLK-Komponenten bereitgestellt wird.

8. Verfahren zum Steuern eines HLK-Systems (10), das eine Vielzahl von HLK-Komponenten, eine oder mehrere Endgeräteeinheiten (28) und ein Steuersystem in Signalkommunikation mit der Vielzahl von HLK-Komponenten aufweist, wobei das Verfahren Folgendes umfasst:

Bestimmen eines Gesamtbedarfs des HLK-Systems (10), wobei der Gesamtbedarf ein gesamter thermischer Heiz- oder Kühlbedarf ist, der durch ein Gebäude oder ein System benötigt wird, das durch das HLK-System (10) versorgt wird;
Bestimmen eines Anfangssollwerts als Reaktion auf den Gesamtbedarf;
Bestimmen einer Bedarfsprognose als Reaktion auf den Gesamtbedarf;
Bestimmen eines Sollwertversatzes als Reaktion auf die Bedarfsprognose;
Erzeugen eines adaptiven Sollwerts durch Kombinieren des Anfangssollwerts und des Sollwertversatzes; und
Bereitstellen des adaptiven Sollwerts an mindestens eine aus der Vielzahl von HLK-Komponenten;
**dadurch gekennzeichnet, dass** der Gesamtbedarf bestimmt wird durch

$$\Delta T_{Cool} = \frac{\sum^{NFCooling} V_i \Delta T_i}{Vtot} \text{ oder } \Delta T_{Heat} = \frac{\sum^{NFHeating} Vi\Delta T_i}{Vtot},$$

wobei $\Delta T_i = RAT_{SP,i} - RAT_i$ die Differenz zwischen dem Raum-/Zonenlufttemperatursollwert $RAT_{SP,i}$ und der gemessenen Raumlufttemperatur $RAT_i$ ist (wobei sich i auf die Endgeräteeinheitsnummer bezieht), wobei die $\Delta T_i$ gemäß einem Dimensionierungsfaktor $Vi$ für jede Endgeräteeinheit (28) gewichtet werden, wobei die Gewichtungsfaktoren $Vi$ eines oder mehrere von einer Einheitsnennkapazität, einem Bereich oder einem Volumen einer Zone, die durch die Endgeräteeinheit (28) versorgt wird, oder einer Prioritätsmaßnahme sind, die durch den Gebäudeeigentümer gewählt wird; und wobei das Maß $Vtot$ die Summe aller Gewichtungsfaktoren über alle Endgeräteeinheiten (28) ist, die in dem HLK-System (10) installiert sind.

9. Verfahren nach Anspruch 8, ferner umfassend das Aktualisieren des adaptiven Sollwerts in vorbestimmten Zeitintervallen.

10. Verfahren nach Anspruch 8 oder 9, wobei das Bestimmen der Bedarfsprognose ein Anwenden einer modellfreien Technik auf einen oder mehrere vergangene Werte des Gesamtbedarfs und einen aktuellen Gesamtbedarf umfasst.

11. Verfahren nach einem der Ansprüche 8 bis 10, wobei das Bestimmen der Bedarfsprognose ein Anwenden einer modellbasierten Technik zum Schätzen eines Modells des HLK-Systems (10) und das Verwenden des Modells zum Schätzen der Bedarfsprognose als Reaktion auf den Gesamtbedarf umfasst.

12. Verfahren nach einem der Ansprüche 8 bis 11, wobei das Bestimmen des Sollwertversatzes Folgendes umfasst: (i) wenn die Bedarfsprognose einen zunehmenden Bedarf des klimatisierten Raums (110) angibt, dann Auswählen eines Sollwertversatzes zum Erhöhen von Autorität des HLK-Systems (10), und (ii) wenn die Bedarfsprognose einen abnehmenden Bedarf des klimatisierten Raums (110) angibt, dann Auswählen eines Sollwertversatzes zum Verringern von Autorität des HLK-Systems (10); oder

wobei das Bestimmen des Sollwertversatzes ein Auswählen des Sollwertversatzes als Reaktion darauf umfasst, ob die Bedarfsprognose innerhalb einer gewünschten Region oder innerhalb einer Entfernung zu einem gewünschten Wert ist; oder wobei das Bestimmen des Sollwertversatzes ein Einstellen des Sollwertversatzes um einen festen Wert umfasst; oder
wobei das Bestimmen des Sollwertversatzes ein Verwenden einer Formel umfasst, die einen Wert zum Einstellen des Sollwertversatzes bestimmt; oder
wobei das Bestimmen des Sollwertversatzes ein Verwenden eines Steuerprozesses zum Stabilisieren der Bedarfsprognose umfasst.

13. Verfahren nach einem der Ansprüche 8 bis 12, wobei das Bestimmen des Sollwertversatzes ein Bestimmen, dass der adaptive Sollwert eine Spanne überschreitet, und das erneute Bestimmen des Sollwertversatzes umfasst, sodass der resultierende adaptive Sollwert die Spanne nicht überschreitet.

14. Verfahren nach einem der Ansprüche 8 bis 13, ferner umfassend ein Filtern des adaptiven Sollwerts vor dem Bereitstellen des adaptiven Sollwerts an die mindestens eine aus der Vielzahl von HLK-Komponenten.

15. Computerprogrammprodukt, das konkret auf einem computerlesbaren Medium verkörpert ist, wobei das Computerprogrammprodukt Anweisungen beinhaltet, die, wenn sie durch einen Prozessor ausgeführt werden, den Prozessor veranlassen, Vorgänge durchzuführen, umfassend:

Bestimmen eines Gesamtbedarfs eines HLK-Systems (10), wobei der Gesamtbedarf ein gesamter thermischer Heiz- oder Kühlbedarf ist, der durch ein Gebäude oder ein System benötigt wird, das durch das HLK-System (10) versorgt wird;
Bestimmen eines Anfangssollwerts als Reaktion auf den Gesamtbedarf;
Bestimmen einer Bedarfsprognose als Reaktion auf den Gesamtbedarf;
Bestimmen eines Sollwertversatzes als Reaktion auf die Bedarfsprognose;
Erzeugen eines adaptiven Sollwerts durch Kombinieren des Anfangssollwerts und des Sollwertversatzes; und
Bereitstellen des adaptiven Sollwerts an mindestens eine aus der Vielzahl von HLK-Komponenten;
**dadurch gekennzeichnet, dass** der Gesamtbedarf bestimmt wird durch

$$\Delta T_{Cool} = \frac{\sum^{NFCooling} V_i \, \Delta T_i}{Vtot} \text{ oder } \Delta T_{Heat} = \frac{\sum^{NFHeating} Vi \Delta T_i}{Vtot},$$

wobei $\Delta T_i = RAT_{SP,i} - RAT_i$ die Differenz zwischen dem Raum-/Zonenlufttemperatursollwert $RAT_{SP,i}$ und der gemessenen Raumlufttemperatur $RAT_i$ ist (wobei sich i auf die Endgeräteeinheitsnummer bezieht), wobei die $\Delta T_i$ gemäß einem Gewichtungsfaktor $Vi$ für jede Endgeräteeinheit (28) gewichtet werden, wobei die Gewichtungsfaktoren $Vi$ eines oder mehrere von einer Einheitsnennkapazität, einem Bereich oder einem Volumen einer Zone, die durch die Endgeräteeinheit (28) versorgt wird, oder einer Prioritätsmaßnahme sind, die durch den Gebäudeeigentümer gewählt wird; und wobei das Maß $Vtot$ die Summe aller Gewichtungsfaktoren über alle Endgeräteeinheiten (28) ist, die in dem HLK-System (10) installiert sind.

**Revendications**

1. Système de CVCA (10) ayant une pluralité de composants de CVCA, une ou plusieurs unités terminales (28) et un système de commande, le système de commande comprenant :

   un dispositif de commande (18) ayant un processeur et une mémoire, le dispositif de commande (18) en communication de signal avec au moins l'un de la pluralité de composants de CVCA, le dispositif de commande (18) étant configuré pour :

       déterminer une demande globale du système de CVCA (10), dans lequel la demande globale est une demande thermique totale de chauffage ou de refroidissement requise par un bâtiment ou un système desservi par le système de CVCA (10) ;
       déterminer une consigne initiale en réponse à la demande globale ;
       déterminer une prévision de demande en réponse à la demande globale ;
       déterminer un décalage de consigne en réponse à la prévision de demande ;
       générer une consigne adaptative en combinant la consigne initiale et le décalage de consigne ; et
       fournir la consigne adaptative à au moins l'un de la pluralité de composants de CVCA ;
       **caractérisé en ce que** la demande globale est déterminée par

$$\Delta T_{Cool} = \frac{\sum^{NFCooling} V_i\, \Delta T_i}{Vtot} \text{ ou } \Delta T_{Heat} = \frac{\sum^{NFHeating} Vi\Delta T_i}{Vtot}$$

   où $\Delta T_i = RAT_{SP,i} - RAT_i$ est la différence entre la consigne de température d'air de la pièce/zone $RAT_{SP,i}$ et la température d'air ambiant mesurée $RAT_i$ (avec i désignant le numéro de l'unité terminale), où les $\Delta T_i$ sont pondérés selon un facteur de dimensionnement $Vi$ pour chaque unité terminale (28), dans lequel les facteurs de pondération $Vi$ sont une ou plusieurs parmi une capacité nominale unitaire, une superficie ou un volume d'une zone desservie par l'unité terminale (28), ou une mesure prioritaire choisie par le propriétaire du bâtiment ; et dans lequel la mesure $Vtot$ est la somme de tous les facteurs de pondération sur toutes les unités terminales (28) installées dans le système de CVCA (10).

2. Système de CVCA selon la revendication 1, dans lequel le dispositif de commande (18) est configuré pour mettre à jour la consigne adaptative à des intervalles de temps prédéterminés.

3. Système de CVCA selon la revendication 1 ou 2, dans lequel la détermination de la prévision de demande comprend l'application d'une technique sans modèle à une ou plusieurs valeurs passées de la demande globale et d'une demande globale actuelle.

4. Système de CVCA selon l'une quelconque des revendications 1 à 3, dans lequel la détermination de la prévision de demande comprend l'application d'une technique basée sur un modèle pour estimer un modèle du système de CVCA (10) et utiliser le modèle pour estimer la prévision de demande en réponse à la demande globale.

5. Système de CVCA selon l'une quelconque des revendications 1 à 4, dans lequel la détermination du décalage de consigne comprend (i) si la prévision de demande indique une demande croissante de l'espace conditionné (110), la sélection d'un décalage de consigne pour augmenter l'autorité du système de CVCA (10) et (ii) si la prévision de demande indique une demande décroissante de l'espace conditionné (110), sélectionner un décalage de consigne pour diminuer l'autorité du système de CVCA (10) ; ou

   dans lequel la détermination du décalage de consigne comprend la sélection du décalage de consigne en réponse au fait que la prévision de demande se trouve dans une région souhaitée ou à une distance d'une valeur souhaitée ; ou
   dans lequel la détermination du décalage de consigne comprend l'ajustement du décalage de consigne par une valeur fixe ; ou
   dans lequel la détermination du décalage de consigne comprend l'utilisation d'une formule déterminant une valeur pour ajuster le décalage de consigne ; ou
   dans lequel la détermination du décalage de consigne comprend l'utilisation d'un processus de commande pour stabiliser la prévision de demande.

**6.** Système de CVCA selon l'une quelconque des revendications 1 à 5, dans lequel la détermination du décalage de consigne comprend la détermination que la consigne adaptative dépasse une plage et la re-détermination du décalage de consigne tel que la consigne adaptative résultante ne dépasse pas la plage.

**7.** Système de CVCA selon l'une quelconque des revendications 1 à 6, dans lequel le dispositif de commande (18) est configuré pour filtrer la consigne adaptative avant de fournir la consigne adaptative à au moins l'un de la pluralité de composants de CVCA.

**8.** Procédé de commande d'un système de CVCA (10) ayant une pluralité de composants de CVCA, une ou plusieurs unités terminales (28) et un système de commande en communication de signal avec la pluralité de composants de CVCA, le procédé comprenant :

la détermination d'une demande globale du système de CVCA (10), dans lequel la demande globale est une demande thermique totale de chauffage ou de refroidissement requise par un bâtiment ou un système desservi par le système de CVCA (10) ;
la détermination d'une consigne initiale en réponse à la demande globale ;
la détermination d'une prévision de demande en réponse à la demande globale ;
la détermination d'un décalage de consigne en réponse à la prévision de demande ;
la génération d'une consigne adaptative en combinant la consigne initiale et le décalage de consigne ; et
la fourniture de la consigne adaptative à au moins un de la pluralité de composants de CVCA ;
**caractérisé en ce que** la demande globale est déterminée par

$$\Delta T_{Cool} = \frac{\sum^{NFCooling} V_i \, \Delta T_i}{Vtot} \text{ ou } \Delta T_{Heat} = \frac{\sum^{NFHeating} Vi \Delta T_i}{Vtot}$$

où $\Delta T_i = RAT_{SP,i} - RAT_i$ est la différence entre la consigne de température d'air de la pièce/zone $RAT_{SP,i}$ et la température d'air ambiant mesurée $RAT_i$ (avec i désignant le numéro de l'unité terminale), où les $\Delta T_i$ sont pondérés selon un facteur de dimensionnement $Vi$ pour chaque unité terminale (28), dans lequel les facteurs de pondération $Vi$ sont une ou plusieurs parmi une capacité nominale unitaire, une superficie ou un volume d'une zone desservie par l'unité terminale (28), ou une mesure prioritaire choisie par le propriétaire du bâtiment ; et dans lequel la mesure $Vtot$ est la somme de tous les facteurs de pondération sur toutes les unités terminales (28) installées dans le système de CVCA (10).

**9.** Procédé selon la revendication 8, comprenant en outre la mise à jour de la consigne adaptative à des intervalles de temps prédéterminés.

**10.** Procédé selon la revendication 8 ou 9, dans lequel la détermination de la prévision de demande comprend l'application d'une technique sans modèle à une ou plusieurs valeurs passées de la demande globale et d'une demande globale actuelle.

**11.** Procédé selon l'une quelconque des revendications 8 à 10, dans lequel la détermination de la prévision de demande comprend l'application d'une technique basée sur un modèle pour estimer un modèle du système de CVCA (10) et utiliser le modèle pour estimer la prévision de demande en réponse à la demande globale.

**12.** Procédé selon l'une quelconque des revendications 8 à 11, dans lequel la détermination du décalage de consigne comprend

(i) si la prévision de demande indique une demande croissante de l'espace conditionné (110), la sélection d'un décalage de consigne pour augmenter l'autorité du système de CVCA (10) et
(ii) si la prévision de demande indique une demande décroissante de l'espace conditionné (110), sélectionner un décalage de consigne pour diminuer l'autorité du système de CVCA (10) ; ou
dans lequel la détermination du décalage de consigne comprend la sélection du décalage de consigne en réponse au fait que la prévision de demande se trouve dans une région souhaitée ou à une distance d'une valeur souhaitée ; ou
dans lequel la détermination du décalage de consigne comprend l'ajustement du décalage de consigne par une valeur fixe ; ou dans lequel la détermination du décalage de consigne comprend l'utilisation d'une formule déterminant une valeur pour ajuster le décalage de consigne ; ou

dans lequel la détermination du décalage de consigne comprend l'utilisation d'un processus de commande pour stabiliser la prévision de demande.

13. Procédé selon l'une quelconque des revendications 8 à 12, dans lequel la détermination du décalage de consigne comprend la détermination que la consigne adaptative dépasse une plage et la re-détermination du décalage de consigne tel que la consigne adaptative résultante ne dépasse pas la plage.

14. Procédé selon l'une quelconque des revendications 8 à 13, comprenant en outre le filtrage de la consigne adaptative avant de fournir la consigne adaptative à au moins l'un de la pluralité de composants CVCA.

15. Produit de programme informatique matérialisé de manière tangible sur un support lisible par ordinateur, le produit de programme informatique comportant des instructions qui, lorsqu'elles sont exécutées par un processeur, amènent le processeur à effectuer des opérations comprenant :

la détermination d'une demande globale d'un système de CVCA (10), dans lequel la demande globale est une demande thermique totale de chauffage ou de refroidissement requise par un bâtiment ou un système desservi par le système de CVCA (10) ;

la détermination d'une consigne initiale en réponse à la demande globale ;

la détermination d'une prévision de demande en réponse à la demande globale ;

la détermination d'un décalage de consigne en réponse à la prévision de demande ;

la génération d'une consigne adaptative en combinant la consigne initiale et le décalage de consigne ; et

la fourniture de la consigne adaptative à au moins un de la pluralité de composants de CVCA ;

**caractérisé en ce que** la demande globale est déterminée par

$$\Delta T_{Cool} = \frac{\sum_i^{NFCooling} V_i \Delta T_i}{V_{tot}} \text{ ou } \Delta T_{Heat} = \frac{\sum_i^{NFHeating} V_i \Delta T_i}{V_{tot}}$$

où $\Delta T_i = RAT_{Sp,i} - RAT_i$ est la différence entre la consigne de température d'air de la pièce/zone $RAT_{Sp,i}$ et la température d'air ambiant mesurée $RAT_i$ (avec i désignant le numéro de l'unité terminale), où les $\Delta T_i$ sont pondérés selon un facteur de pondération $V_i$ pour chaque unité terminale (28), dans lequel les facteurs de pondération $V_i$ sont une ou plusieurs parmi une capacité nominale unitaire, une superficie ou un volume d'une zone desservie par l'unité terminale (28), ou une mesure prioritaire choisie par le propriétaire du bâtiment ; et dans lequel la mesure $V_{tot}$ est la somme de tous les facteurs de pondération sur toutes les unités terminales (28) installées dans le système de CVCA (10).

WATER TEMP

WATER PRESSURE

THERMAL DEMAND

PUMP(S)

SUPPLY AIR TEMP

TERMINAL UNITS

CAPACITY PRODUCTION (CHILLER, HP,...)

AIR CONDITIONING

FIG. 1

FIG. 2

DEMAND OF ALL
ZONES

120

DETERMINE BUILDING THERMAL DEMAND

120a 120b 120c 120d 120e

AGGREGATE
DEMAND

*FIG. 3*

CONTROLLER 18

CONNECTIONS WITH
HVAC SYSTEM

AGGREGATE
DEMAND — 120

DEMAND FORCAST — 140

SETPOINT OFFSET(S) — 150

DECISION TO STRENGTHEN
OR WEAKEN PREVIOUS OFFSET — 151

DECISION OF
AMPLITUDE OF CHANGE — 152

ADJUSTING OFFSET
IF NECESSARY — 153

110

ENVIRONMENT CONDITIONED BY HVAC
SYSTEM (BUILDING, ROOM, CAR, PLANE,...)

HVAC SYSTEM
(ACTUATION &
SENSING)

10

ADPATIVE SETPOINT(S) — 160

130 — INITIAL
SETPOINT(S) (+) — 161

RESTRICTING HVAC SETPOINT
IN (VARIABLE) RANGE — 162

CONNECTIONS WITH
HVAC SYSTEM

FILTERING (E.G.
LOW-PASS FILTER) — 163

PERIODICAL EXECUTION (E.G. EVERY 5')

FIG. 4

**EP 3 391 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015077754 A1
- US 20150045962 A1
- WO 2006034718 A1
- WO 2011149600 A2
- US 2011046792 A1
- US 2014277769 A1

### Non-patent literature cited in the description

- Development of methods for determining demand-limiting setpoint trajectories in buildings using short-term measurements. **LEE K-H et al.** BUILDING AND ENVIRONMENT. PERGAMON PRESS, 01 October 2008, vol. 43, 1755-1768